# EUROPEAN PATENT APPLICATION

(11) **EP 4 430 999 A1**
(43) Date of publication of application: **18.09.2024**
(21) Application number: 24163009.4
(22) Date of filing: 12.03.2024
(51) Int. Cl.: A47K 5/00, B60N 3/00, B60N 3/10, B60R 11/02

(54) **HOOKING DEVICE FOR A HANGING ACCESSORY AND HANGING ACCESSORY COMPRISING SAID HOOKING DEVICE**

(30) Priority: 13.03.2023 IT 202300004650
(71) Applicant: C.S. S.r.l., 35010 Villanova di Camposampiero (PD) (IT)
(72) Inventor: SCAPPOCIN, Mauro, 35010 Villanova di Camposampiero PD (IT); GRAFFEO, Monica, 33084 Cordenons PN (IT)
(74) Representative: Pozzato, Matteo

(57) **Abstract**

This disclosure relates to a hooking device (100) for a hanging accessory (1000) configured to attach the latter to a support element. The hooking device (100) comprises a primary body (10) associable with said hanging accessory (1000), and a secondary body (20) configured, in use, for attachment to a support element. The secondary body (20) is rotatably associated with said primary body (10) and comprises a first abutting element (30) and a second abutting element (40) configured, in use, to cooperate with said first abutting element (10) for attaching said secondary body (20) to a support element. At least one of said first abutting element (30) and said second abutting element (40) is slidably associated with said secondary body (20) to modify a distance between said first abutting element (30) and said second abutting element (40).

This disclosure also relates to a hanging accessory (1000) comprising a hooking device (100).

## Description

The present disclosure relates generally to a hooking device. More specifically, this disclosure concerns a hooking device for a hanging accessory, particularly a hooking device configured to hook a hanging accessory to a support element, preferably a furnishing element.

In many occasions, there is a need to hang or hook a hanging accessory to a support.

A typical example is that of hanging accessories for supporting objects, such as in the bathroom or generally in the house. For example, it can often be advantageous to hook a hanging accessory, such as an object support, having, for example, a support surface for supporting objects, to a furnishing element, such as a table, a bathtub, a chair.

Another example may involve hooking a phone or tablet holder device onto a support, such as a portion of a vehicle.

In order to hook hanging accessories of the type described, devices shaped like clamps are typically used to hook the hanging accessory to a specific support, such as a furnishing element.

Such known clamp devices generally comprise a first and a second abutting element configured to cooperate with each other and be arranged, in use, around a support element, so as to hook onto it.

More specifically, known hooking devices, as mentioned configured as clamps, comprise a main body which, in use, is configured to support a hanging accessory. The first abutting element and the second abutting element are generally protruding elements from such main body, along a direction orthogonal or substantially orthogonal to a main direction of development of the main body itself.

In detail, the first abutting element comprises a first abutting surface, while the second abutting element comprises a second abutting surface, arranged, in use, facing and parallel to the first abutting surface. These first and second abutting surfaces, respectively of the first abutting element and the second abutting element, are configured, in use, to come into contact with opposite surfaces of a support element, and have a main development surface orthogonal or substantially orthogonal to that of the main body.

In order to hook the hanging accessory to a support element, such as a furnishing element, the position of the first abutting element is movable relative to the second abutting element. In other words, a distance between the first abutting element and the second abutting element can be adjusted so that, in use, the furnishing element can be interposed between these first and second abutting elements.

However, the structure of known clamp hooking devices represents a major drawback, primarily due to the shape and arrangement of the abutting elements relative to the main body.

Specifically, the fact that these first and second abutting elements comprise abutting surfaces orthogonal, or substantially orthogonal, to the main body limits severely the field of use of the hanging devices to which the hooking device is associated.

Indeed, such a configuration of clamp devices does not allow for an effective attachment of hanging devices to support elements with different or particular shapes and/or inclinations. Said differently, known clamp devices enable the attachment of a hanging device or accessory to support structures with different thicknesses, but not to support structures with particular inclinations or shapes, such as those characterized by a curved or bent surface, and possibly inclined as well.

Specifically, the structure of known clamp devices allows for effective attachment of a hanging accessory only to support elements, such as furniture elements, with a vertical or substantially vertical side wall, or alternatively, horizontal or substantially horizontal, depending on the configuration of the attachment device and the hanging accessory, onto which the clamp device can be attached.

In other words, known clamp devices, due to their configuration, allow for effective attachment to a support structure or element with parallel surfaces, onto which the clamp device can effectively fasten.

Furthermore, the fact that the first abutting element develops orthogonally or substantially orthogonally to the main plane, to which a hanging accessory can be associated, means that known attachment devices are particularly usable only on support elements with vertical or substantially vertical attachment walls.

The underlying problem addressed in this disclosure is thus to overcome the drawbacks of traditional solutions, allowing for the creation of a hooking device and a hanging accessory comprising such hooking device, whose use in relation to a support element is versatile and simplified.

The task of a hooking device and a hanging accessory according to this disclosure is therefore to solve this problem.

Within this task, one aim of this disclosure is to provide a hooking device configured for attachment to support structures with different inclinations. Additionally, within this task, another aim of this disclosure is to provide a hooking device configured for attachment to support structures with different shapes.

Furthermore, an aim of this disclosure is to provide a hooking device configured so that a user can modify the configuration of the hooking device itself, particularly its abutting elements, relative to its main body, depending on a support element or structure to which the hooking device is intended to be attached.

These tasks, as well as other aims that will become clearer below, are achieved by a hooking device and a hanging accessory comprising such hooking device according to the attached independent claims.

Detailed features of a hooking device and a hanging accessory according to this disclosure are set forth in the dependent claims.

Further features and advantages of this disclosure will become more apparent from the description of a preferred, but not exclusive, embodiment of a hooking device and a hanging accessory according to this disclosure, illustrated in an indicative and non-limiting manner in the attached drawings listed below.

In detail, reference will be made to the figures of the attached drawings, wherein:
- Figure 1 represents a side view of a hooking device according to an aspect of the present disclosure;
- Figures 2 and 3 represent additional perspective views of a hooking device according to an aspect of the present disclosure;
- Figure 4 shows a side view of a hooking device according to an aspect of the present disclosure, where a secondary body of the hooking device is rotated relative to a secondary body of the same hooking device;
- Figures 5 and 6 show perspective views of a hanging accessory comprising a hooking device according to an aspect of the present disclosure;
- Figure 7 shows a perspective view of a hanging accessory comprising a hooking device, where a secondary body of the hooking device is rotated relative to a secondary body of the same hooking device, according to an aspect of the present disclosure;
- Figures 8 and 9 show views of a hanging accessory comprising a hooking device in a condition or configuration of attachment to a support element.

With reference to the attached figures, an embodiment of a hooking device for a hanging accessory is indicated by reference number 100.

The term "hooking device," as used in the context of this disclosure, refers to a device configured for attaching or associating, preferably of a hanging accessory, to a structure or support element, preferably a piece of furniture, such as a bathtub, a chair, a table, a shelf, or generally any protruding or projecting element from a surface.

The term "hanging accessory," as used in the context of this disclosure, refers to an accessory, such as an object support surface, configured to be associated with a support element or structure, such as a piece of furniture, such as a bathtub, a chair, a table, a shelf, or generally any protruding or projecting element from a surface, through a hooking device. Alternatively, the support element or structure may consist of a portion of an automobile, and the hanging accessory may be configured to support a device, such as a smartphone.

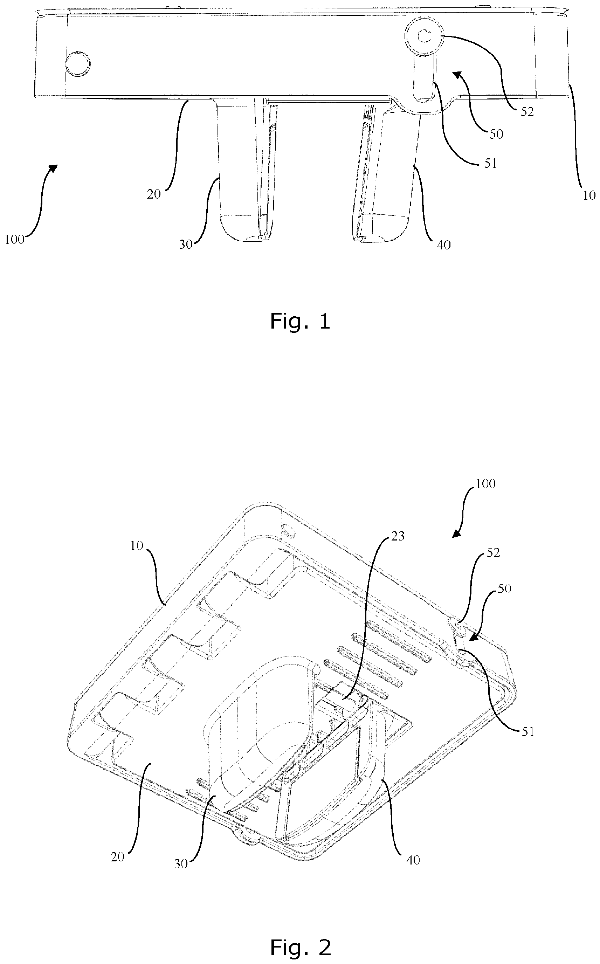

As previously mentioned, hooking device 100 for hanging accessory 1000 according to this disclosure is configured to attach the latter to a support element. In detail, as visible in Figures 1 through 4, hooking device 100 comprises a primary body 10 that extends along a first development plane A, wherein such primary body 10 is configured for connection with a hanging accessory 1000. In other words, in use, primary body 10 is associable with hanging accessory 1000.

Furthermore, hooking device 100 further comprises a secondary body 20 which is configured, in use, for attachment to a support element. In other words, secondary body 20 is configured, in use, for connection to a support element, so as to secure, or attach, or fix, hooking device 100, and possibly a hanging accessory 1000, to a support element.

The secondary body 20 preferably extends along a second development plane B and is rotatably or pivotally associated with the primary body 10. In this way, advantageously, the primary body 10 can be rotated, tilted, or turned relative to the secondary body 20. In other words, this allows for tilting the first development plane A along which the primary body 10 extends relative to the second development plane B along which the secondary body 20 extends.

Thus, essentially, hooking device 100 comprises two main bodies, namely the primary body 10 and the secondary body 20, which may preferably be plate-like bodies or plates, meaning they predominantly extend along their respective main development plane, and they are associated with each other, allowing for a change in inclination between them.

In this regard, for example, the primary body 10 and the secondary body 20 can be hinged together.

According to a preferred aspect of the present disclosure, the primary body comprises a first terminal region 11, while the secondary body 20 comprises a second terminal region 21. According to this aspect, the primary body 10 and the secondary body 20 are rotatably associated with each other, for example, through a hinge or a pin, at the first terminal region 11 of the primary body 10 and the second terminal region 21 of the secondary body 20.

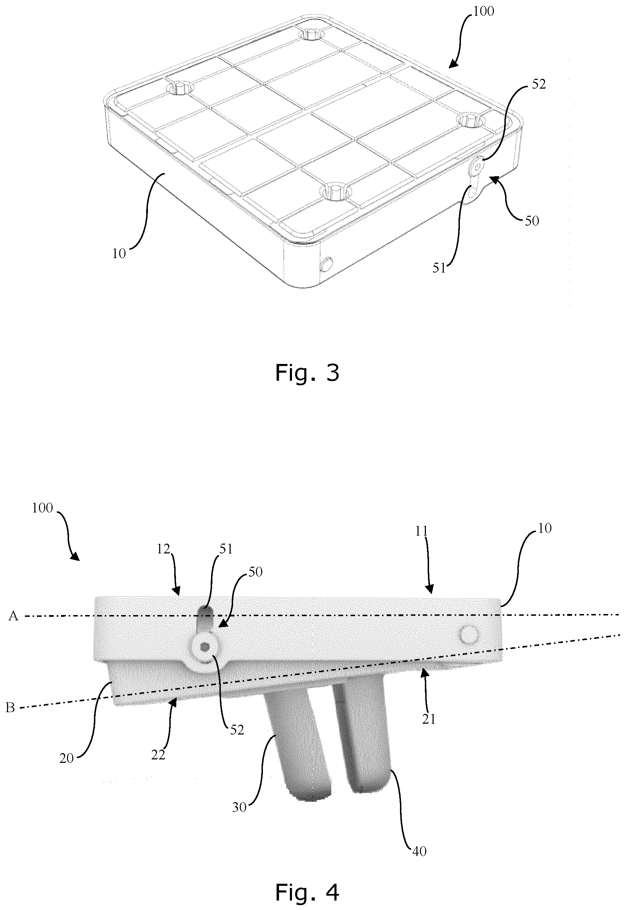

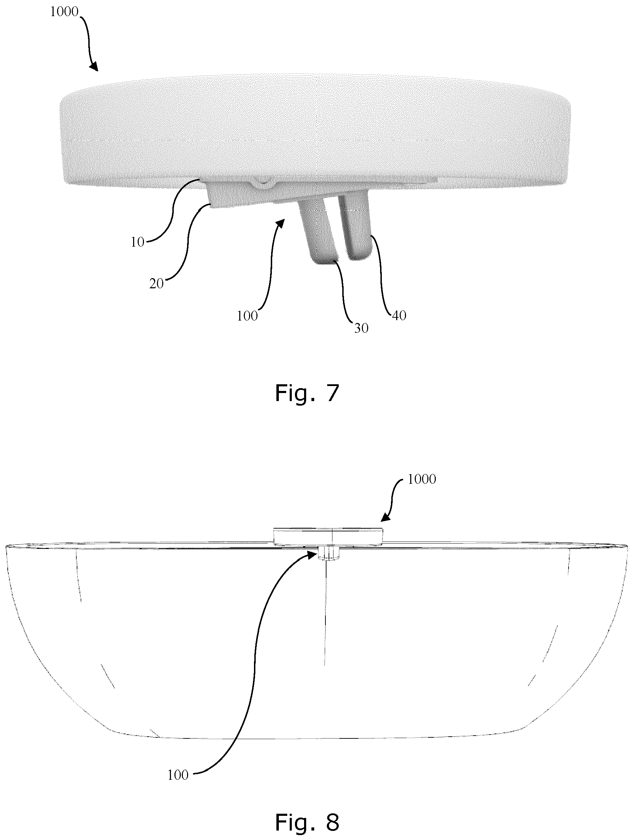

Preferably, according to an aspect of the present disclosure, the primary body 10 and the secondary body 20 can be arranged with each other in at least two different operational configurations. In other words, the secondary body 20 is rotatable relative to the primary body 10 at least between a first operational configuration (visible, for example, in Figures 1, 2, 3, 5, and 6) and a second operational configuration (shown, for example, in Figures 4 and 7). Preferably, in the first operational configuration, the first development plane A of the primary body 10 and the second development plane B of the secondary body 20 are parallel or substantially parallel to each other.

Preferably, furthermore, the primary body 10 is configured such that, at least in said first operational configuration, it contains, at least partially, the secondary body 20. In other words, the primary body 10 defines a housing for the secondary body 20. In the first operational configuration, the secondary body 20 is substantially contained within the housing defined by the primary body 10. This way, the hooking device 100 is particularly compact.

In the second operational configuration, however, the first development plane A of the primary body 10 and the second development plane B of the secondary body 20 are inclined relative to each other. Preferably, in this second operational configuration, the secondary body 20 protrudes or partially extends out of the housing defined by the primary body 10.

According to another preferred aspect of the present disclosure, in order to stably adjust the inclination of the secondary body 20 relative to the primary body 10, the hooking device 100 comprises an adjustment device 50.

Preferably, the adjustment device 50 comprises a first sliding guide 51 disposed in the primary body 10. Additionally, the adjustment device 50 comprises a sliding element 52 associated with the secondary body 20 and slidably arranged in the first sliding guide 51.

Preferably, the sliding element 52 includes locking means configured to lock or prevent sliding of the sliding element 52 itself in the first sliding guide 51 and consequently prevent rotation of the secondary body 20 relative to the primary body 10, for example, at the first operational configuration or the second operational configuration.

Furthermore, preferably, the sliding guide 51 is disposed in the primary body 10 in a third terminal region 12 of the primary body 10, where this third terminal region 12 is opposite to the first terminal region 11 of the same primary body 10. According to this aspect, preferably, the sliding element 52 is associated with the secondary body 20 in a fourth terminal region 22 of the secondary body 20, where this fourth terminal region 22 is opposite to the second terminal region 21 of the secondary body 20 itself.

To connect or attach the secondary body 20 to a support element in use, the secondary body 20 itself comprises a first abutting element 30 and a second abutting element 40. The latter is configured, in particular, to cooperate, in use, with the first abutting element 30 to attach the secondary body 20 to a support element. Preferably, the first abutting element 30 and the second abutting element 40 are protruding bodies from a surface of the secondary body 20. In particular, the first abutting element 30 and the second abutting element 40 protrude from the secondary body 20 and extend in a main development direction orthogonal or substantially orthogonal to the second development plane B of the secondary body 20.

In other words, the first abutting element 30 is configured, in use, to be associated or opposed to a first surface of a support element, while the second abutting element 40 is configured, in use, to be associated, faced, or opposed to a second surface of a support element, where this second surface is opposite to the first surface of the support element. Stated differently, the first abutting element 30 and the second abutting element 40 substantially form a clamp device associated with the secondary body 20 so as to enable an association or attachment of the hooking device 100 to a support element.

For this purpose, at least one of the first abutting element 30 and the second abutting element 40 is slidably associated with the secondary body. This way, it is possible to adjust the distance between the first abutting element 30 and the second abutting element 40 in order to attach or associate the hooking device 100, in use, to a support element. In this sense, advantageously, it is possible to attach the hooking device 100 to support elements of different thicknesses.

According to a preferred aspect of the present disclosure, the secondary body 20 comprises a second sliding guide 23 configured to allow sliding of at least one of the first abutting element 30 and the second abutting element 40 relative to the other of the first abutting element 30 and the second abutting element 40.

For example, according to an aspect of the present disclosure, the first abutting element 30 is fixed relative to the secondary body 20, while the second abutting element 40 is slidably associated with the secondary body 20, particularly through the second sliding guide 23.

Preferably, the first and second abutting elements 30, 40 are movable relative to each other at least between a third operational configuration, or opening operational configuration, and a fourth operational configuration, or hooking configuration. In this fourth operational configuration, the second abutting element 40 is positioned closer to, or nearer to, the first abutting element 30 than in the third operational configuration, so as to hook the hooking device 30 to a support element.

According to a further preferred aspect of the present disclosure, the hooking device 100 comprises a second adjustment device configured to lock sliding of one of the first abutting element 30 and the second abutting element 40 relative to the other of the first abutting element 30 and the second abutting element 40.

For example, the second adjustment device is preferably configured to lock sliding of one of the first abutting element 30 and the second abutting element 40 relative to the other of the first abutting element 30 and the second abutting element 40 at least in the third operational configuration, or opening operational configuration, and in the fourth operational configuration, or hooking configuration.

The second adjustment device may include fastening means such as screws.

According to a further preferred aspect of the present disclosure, the hooking device 100 is made of silicone material. This ensures, advantageously, better grip of the hooking device 100 to the support element, and overall better stability during its use.

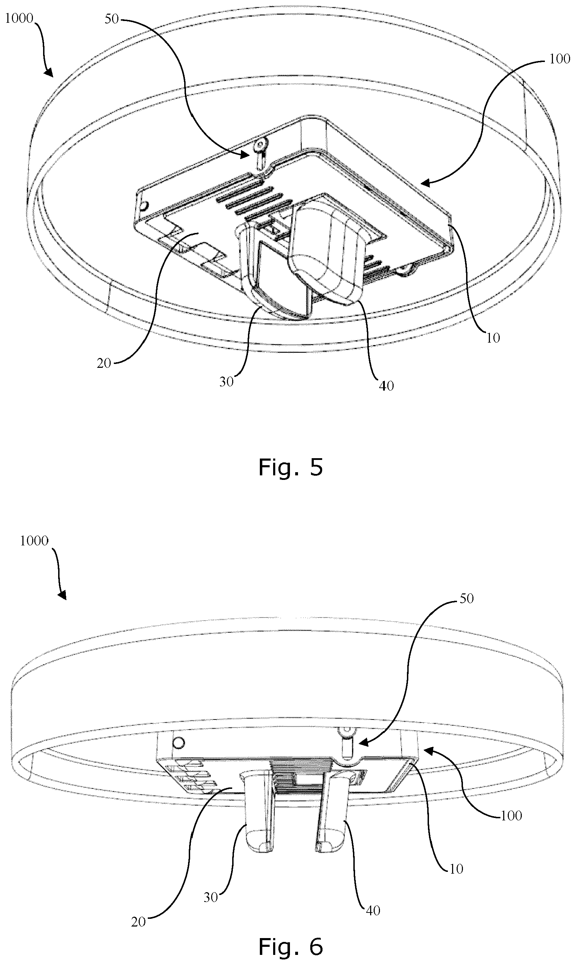

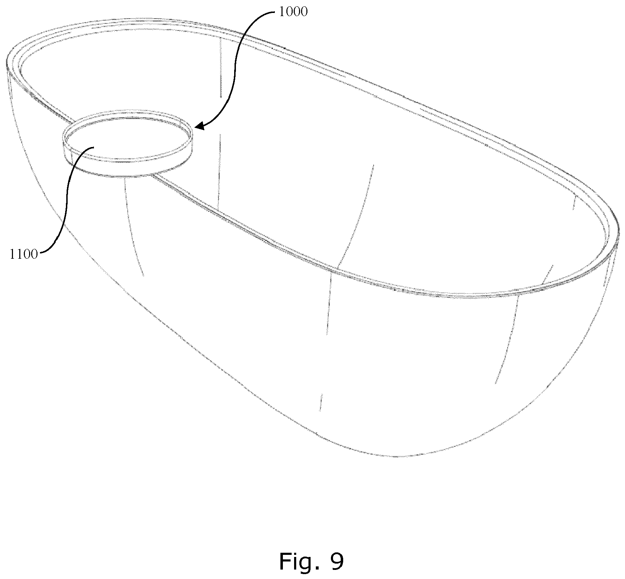

With particular reference to Figures 5 to 7, the present disclosure further relates to a hanging accessory 1000 comprising a hooking device 100. This hanging accessory 1000 is configured for attachment to a support device, preferably a piece of furniture, such as, for example, a bathtub, as illustrated in Figures 8 and 9.

Such hanging accessory 1000 may also comprise a support element 1100, for example, for supporting objects. In particular, the support element 1100 may include a base element, associated or associable with the primary body 10 of the hooking device 100, and having a main development direction or surface parallel or substantially parallel to that of the first development plane A of the primary body 10.

In particular, preferably, the support element 1100 can be associated with the hooking device 100, and in particular with the primary body 10, for example, through first fastening means, preferably removable fastening means, such as screws, and/or second fastening means, such as adhesive material. Advantageously, the fixation between the support element 1100 and the primary body 10 of the hooking device through the combination of first fastening means and second fastening means allows the possibility of attaching hanging accessories with a support element 1100 even of relatively large sizes to a support element.

The subject matter of the present disclosure has been described so far with reference to its embodiments. It is to be understood that other embodiments falling within the scope of the claims set forth below may exist, all falling within the protection scope of the claims set forth below.

## Claims

1. Hooking device (100) for a hanging accessory (1000) configured to attach the latter to a supporting element, said hooking device (100) comprising a primary body (10) to be associated with said hanging accessory (1000), and a secondary body (20) configured, in use, for attachment to a supporting element, said secondary body (20) being rotatably associated with said primary body (10) and comprising a first abutting element (30) and a second abutting element (40) configured, in use, to cooperate with said first abutting element (10) for attaching said secondary body (20) to a supporting element, wherein at least one of said first abutting element (30) and said second abutting element (40) is slidably associated with said secondary body (20) to modify a distance between said first abutting element (30) and said second abutting element (40), the hooking device (100) comprising a first adjusting device (50) configured to adjust an inclination of said secondary body (20) relative to said primary body (10), wherein said adjusting device (50) comprises a first sliding guide (51) arranged in said primary body (10) and a sliding element (52) associated with said secondary body (20) and sliding in said first sliding guide (51), said sliding element (52) comprising locking means configured to block the sliding of said sliding element (52) in said first sliding guide (51) and the rotation of said secondary body (20) relative to said primary body (10).

2. Hooking device (100) according to claim 1, wherein said primary body (10) comprises a first end region (11) and wherein said secondary body (20) comprises a second end region (21); said primary body (10) and said secondary body (20) being rotatably associated with each other at said first end region (11) of said primary body (10) and said second end region (21) of said secondary body (20).

3. Hooking device (100) according to the preceding claim, wherein said sliding guide (51) is arranged in said primary body (10) in a third end region (12) of said primary body (10), said third end region (12) being opposite to said first end region (11), and wherein said sliding element (52) is associated with said secondary body (20) in a fourth end region (22) of said secondary body (20), said fourth end region (22) being opposite to said second end region (21).

4. Hooking device (100) according to any of the preceding claims, wherein said secondary body (20) is rotatable relative to said primary body (10) between at least a first operational configuration and a second operational configuration; said primary body (10) being configured to define a housing configured to accommodate said secondary body (20) at least in said first operational configuration, wherein in said second operational configuration said secondary body protrudes or extends out of said housing.

5. Hooking device (100) according to any of the preceding claims, wherein said secondary body (20) comprises a second sliding guide (23) configured to allow sliding of at least one of said first abutting element (30) and said second abutting element (40).

6. Hooking device (100) according to any of the preceding claims, comprising a second adjusting device configured to lock the sliding of one of said first abutting element (30) and said second abutting element (40) relative to the other of said first abutting element (30) and said second abutting element (40).

7. Hooking device (100) according to any of the preceding claims, wherein said primary body (10) and said secondary body (20) are plate bodies or substantially plate bodies.

8. Hanging accessory (1000) comprising a hooking device (100) according to any of the preceding claims.
